# EUROPEAN PATENT SPECIFICATION

(11) **EP 3 034 134 B1**
(45) Date of publication and mention of the grant of the patent: **14.02.2018**
(21) Application number: 15150140.0
(22) Date of filing: 06.01.2015
(51) Int. Cl.: A62B 35/00, B32B 1/08, B32B 5/02, D03D 3/02, D03D 3/04

(54) **Safety appliance**
Sicherheitsvorrichtung
Appareil de sécurité

(30) Priority: 17.12.2014 CN 201420794513 U
(43) Date of publication of application: 22.06.2016
(73) Proprietor: Polyunion Textile (Shenzhen) Factory, Shenzhen Guangdong 518125 (CN)
(72) Inventor: Chiu, Chung Che, Shenzhen (CN)
(74) Representative: Sun, Yiming

(56) References cited:
- EP-A2- 2 889 057
- CH-A- 474 272
- CN-A- 103 706 086

## Description

### TECHNICAL FIELD

The present invention relates to the technical field of climbing, in particular to a safety appliance.

### BACKGROUND OF THE PRESENT INVENTION

In the prior art, most of safety appliances used in aspects such as climbing or competitive sports are of a multilayer-sewn structure. That is, a filler for providing protection is filled in a hollow webbing, and then the two ends of the hollow webbing is sewn together. For a safety appliance made in such a manner, the stitches at the joints are very prone to get worn and then break during long-term use in high-strength environments, causing great safety hazards. Such a prior known safety appliance is disclosed in CN 103 706 086 A.

### SUMMARY OF THE PRESENT INVENTION

An objective of the invention is to provide a safety appliance that is simple in structure, safe and reliable in use, and not easy to break.

To realize this purpose, the present invention employs the following technical solutions.

A safety appliance is provided, including a seamless annular webbing and a filler wrapped within the seamless annular webbing, the seamless annular webbing being annular and seamless and having webbing layers wrapped layer upon layer in the cross-section thereof, the filler being arranged in the middle of the seamless annular webbing.

The seamless annular webbing is formed by wrapping a hollow webbing of a tubular monolayer structure layer upon layer, and a distal end of the hollow webbing of a tubular monolayer structure is integrally seamless-woven with an outer side wall of the shaped seamless annular webbing.

The safety appliance is formed by integrally wrapping the filler by a seamless annular webbing loom.

The filler is integrally molded from high-strength cushioning material.

The filler is a band having a wide middle part and gradually narrowed two ends.

The present invention has the following beneficial effects. The safety appliance provided by the present invention includes a seamless annular webbing and a filler wrapped within the seamless annular webbing, the seamless annular webbing being annular and seamless and having webbing layers wrapped layer upon layer in the cross-section thereof, the filler being arranged in the middle of the seamless annular webbing. The arrangement of the filler can provide effective protection, the seamless annular webbing wrapping around the filler can effectively prevent the safety appliance from breaking. The safety appliance provided by the present invention is simple in structure, safe and reliable in use, and not easy to break.

### BRIEF DESCRIPTION OF THE DRAWINGS

Fig. 1 is an axial diagram of a safety appliance according to the present invention;
Fig. 2 is a structural diagram of a cross-section AA of Fig. 1; and
Fig. 3 is a diagram of processing the safety appliance according to the present invention, in the drawings: 1-Filler; 2-Seamless annular webbing; 21-Webbing layer; 3-Silk thread

### DETAILED DESCRIPTION OF THE PRESENT INVENTION

The technical solutions of the present invention will be further described with reference to the accompanying drawings by specific implementations.

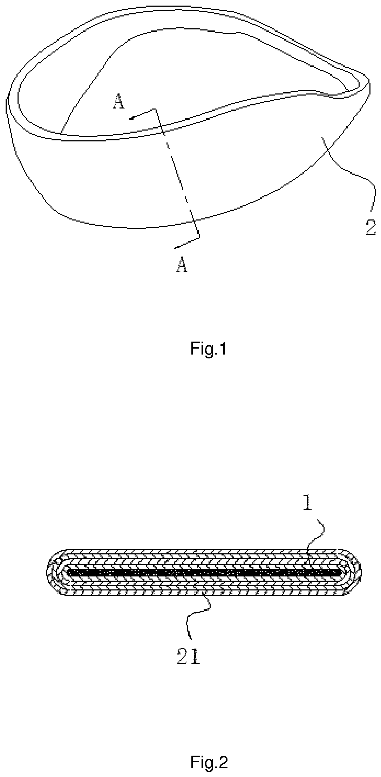

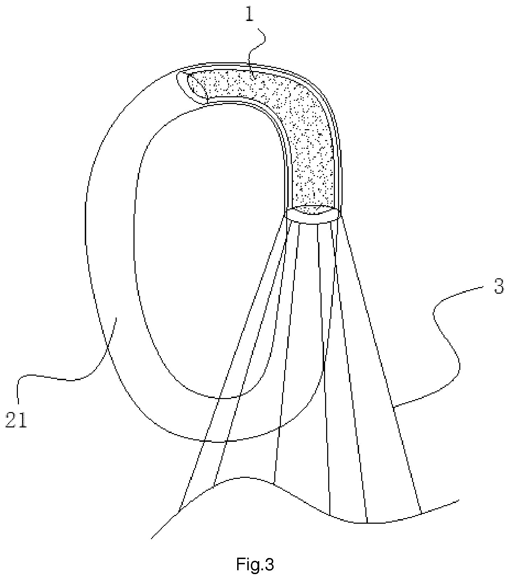

As shown in Fig. 1 and Fig. 2, a safety appliance is provided, including a seamless annular webbing 2 and a filler 1 wrapped within the seamless annular webbing 2, the seamless annular webbing 2 being annular and seamless and having webbing layers 21 wrapped layer upon layer in the cross-section thereof, the filler 1 being arranged in the middle of the seamless annular webbing 2. As a preferred implementation of the present invention, as shown in Fig. 3, the seamless annular webbing 2 is formed by wrapping a hollow webbing of a tubular monolayer structure layer upon layer, and a distal end of the hollow webbing of a tubular monolayer structure is integrally seamless-woven with an outer side wall of the shaped seamless annular webbing 2. Preferably, during wrapping the hollow webbing layer upon layer, the filler is first placed into the first section of the hollow webbing, the outer hollow webbing layer is then wrapped layer upon layer during the weaving via a silk thread 3, and finally the distal end is integrally seamless-woven with an outer side wall of the shaped seamless annular webbing 2. In this way, joints are effectively avoided to prevent the safety appliance from breaking. As an implementation, the safety appliance is formed by integrally wrapping the filler 1 by a seamless annular webbing loom.

As a further implementation of the present invention, the filler 1 is integrally molded from high-strength cushioning material, for example, high-strength plastic parts or high-cushioning rubbers. Better protection may be further provided.

As a preferred implementation, the filler 1 is a band having a wide middle part and gradually narrowed two ends. Hence, the seamless annular webbing 2 tightly wraps the filler to form a safety appliance having a shape consistent to that of the filler. The filler may be designed into other shapes, if desired.

Although the technical principle of the present invention has been described above by specific embodiments, these descriptions are merely provided to explain the principle of the present invention and shall be not constructed in any way as limiting the protection scope of the present invention. Based on the explanations herein, a person of ordinary skill in the art may come up with other specific implementations of the present invention without any creative efforts, and such implementations shall fall into the protection scope of the present invention.

## Claims

1. A safety appliance, comprising a seamless annular webbing (2) and a filler (1) wrapped within the seamless annular webbing (2), the seamless annular webbing (2) being annular and seamless and having webbing layers (21) wrapped layer upon layer in the cross-section thereof, the filler (1) being arranged in the middle of the seamless annular webbing (2),
**characterized in that**
the filler (1) is integrally molded from high-strength cushioning material.

2. The safety appliance according to claim 1, **characterized in that** the seamless annular webbing (2) is formed by wrapping a hollow webbing of a tubular monolayer structure layer upon layer, and a distal end of the hollow webbing of a tubular monolayer structure is integrally seamless-woven with an outer side wall of the shaped seamless annular webbing (2).

3. The safety appliance according to claim 1, **characterized in that** the safety appliance is formed by integrally wrapping the filler (1) by a seamless annular webbing loom.

4. The safety appliance according to claim 1, **characterized in that** the filler (1) is a band having a wide middle part and gradually narrowed two ends.

## Patentansprüche

1. Sicherheitsvorrichtung, ein saumloses ringförmiges Gewebe (2) umfassend und einen Füllstoff (1), der innerhalb des saumlosen ringförmigen Gewebes (2) eingewickelt ist, wobei das saumlose ringförmige Gewebe (2) ringförmig und saumlos ist und Gewebeschichten (21) aufweist, die im Querschnitt davon Schicht auf Schicht gewickelt sind, wobei der Füllstoff (1) in der Mitte des saumlosen ringförmigen Gewebes (2) angeordnet ist,
**dadurch gekennzeichnet, dass**
der Füllstoff (1) integral aus hochstarkem Polstermaterial geformt ist.

2. Sicherheitsvorrichtung nach Anspruch 1, **dadurch gekennzeichnet, dass** das saumlose ringförmige Gewebe (2) durch Wickeln eines hohlen Gewebes einer rohrförmigen Einzelschichtstruktur Schicht auf Schicht geformt wird und ein distales Ende des hohlen Gewebes einer rohrförmigen Einzelschichtstruktur integral mit einer äußeren Seitenwand des geformten saumlosen ringförmigen Gewebes (2) saumlos verwebt ist.

3. Sicherheitsvorrichtung nach Anspruch 1, **dadurch gekennzeichnet, dass** die Sicherheitsvorrichtung durch integrales Wickeln des Füllstoffes (1) von einem Webstuhl für saumlose ringförmige Gewebe geformt wird.

4. Sicherheitsvorrichtung nach Anspruch 1, **dadurch gekennzeichnet, dass** der Füllstoff (1) ein Band mit einem breiten Mittelteil und nach und nach enger werdenden zwei Enden ist.

## Revendications

1. Dispositif de sécurité, comprenant une sangle annulaire sans couture (2) et un remplissage (1) enveloppé dans la sangle annulaire sans couture (2), la sangle annulaire sans couture (2) étant annulaire et sans couture et comportant des couches de sangle (21) enveloppées couche sur couche dans sa section transversale, le remplissage (1) étant disposé au milieu de la sangle annulaire sans couture (2),
**caractérisé en ce que**
le remplissage (1) est moulé en une pièce à partir de matériau de rembourrage à haute résistance.

2. Dispositif de sécurité selon la revendication 1, **caractérisé en ce que** la sangle annulaire sans couture (2) est formée en enveloppant une sangle creuse de structure monocouche tubulaire couche sur couche et qu'une extrémité distale de la sangle creuse de structure monocouche tubulaire est tissée sans couture de manière à faire partie intégrante d'une paroi latérale extérieure de la sangle annulaire façonnée sans couture (2).

3. Dispositif de sécurité selon la revendication 1, **caractérisé en ce que** le dispositif de sécurité est formé en enveloppant intégralement le remplissage (1) au moyen d'un métier de tissage annulaire sans couture.

4. Dispositif de sécurité selon la revendication 1, **caractérisé en ce que** le remplissage (1) est une bande dotée d'une partie centrale large et de deux extrémités se rétrécissant graduellement.
